Europäisches Patentamt

(19) **European Patent Office**

Office européen des brevets

(11) Publication number: **0 003 635**
**B1**

(12) **EUROPEAN PATENT SPECIFICATION**

(45) Date of publication of patent specification: **27.01.82**

(21) Application number: **79300031.6**

(22) Date of filing: **09.01.79**

(51) Int. Cl.³: **B 65 D 65/38,**
**C 08 L 23/08, B 29 D 7/00,**
**B 29 D 9/00**

(54) Self-adhering packaging film and process for preparing it.

(30) Priority: **09.01.78 US 868158**

(43) Date of publication of application:
**22.08.79 Bulletin 79/17**

(45) Publication of the grant of the European patent:
**27.01.82 Bulletin 82/4**

(84) Designated Contracting States:
**DE FR GB NL SE**

(56) References cited:
**DE - A - 2 212 447**
**DE - A - 2 259 014**
**DE - B - 1 047 704**
**GB - A - 1 401 880**
**GB - A - 1 472 059**
**US - A - 3 361 607**
**US - A - 3 625 348**
**US - A - 3 741 253**
**US - A - 4 022 850**

(73) Proprietor: **W.R. GRACE & CO.**
**Grace Plaza 1114 Avenue of the Americas**
**New York NY 10036 (US)**

(72) Inventor: **Weinberg, Alan Stuart**
**6 Rollingreen Road**
**Greenville, South Carolina 29607 (US)**
Inventor: **Zu Sun, Joseph**
**Woodlake Drive Route 3**
**Spartanburg South Carolina 29301 (US)**

(74) Representative: **Collier, Jeremy Austin Grey et al,**
**J.A.Kemp & Co. 14, South Square Gray's Inn**
**London WC1R 5EU (GB)**

Courier Press, Leamington Spa, England.

## Self-adhering packaging film and process for preparing it

This invention relates to a flexible thermoplastic packaging film which will adhere to itself within certain temperature ranges and is referred to as being self-adhering. The self-adhering film of the invention is preferably heat-shrinkable, and can be a single film or a film laminate of which a surface layer is self-adhering, especially a laminate which also contains a layer which is highly impervious to the passage of oxygen and/or moisture therethrough. Such a laminate is especially useful for packaging fresh meat, dairy products, or poultry.

A self-adhering packaging film is, of course, one which will adhere to itself in a contact seal and which in end use, i.e. when enclosing the packaged article, will stay sealed to itself without application of external force, during normal commercial handling of the package. The expression "without external force" means that the self-adherence is maintained by the strength of the adhesive bond alone and is not due to any extraneous force pushing the film sheets or package walls together as would be the case when the interior of a bag is evacuated so that the bag walls collapse against themselves and are held in contact under the influence of atmospheric pressure.

Self-adhering packaging films, including films which are heat-shrinkable, are well known. In making a self-adhering film, particularly a self-adhering film which is to be made into receptacles such as bags, three key factors must be balanced, namely: processability (defined below), sealability and seal strength, and self-adhering ability of the film. "Processability" is the ease with which a bag or receptacle free of wrinkles and creases may be made from film and, after being made, the ease with which a bag or receptacle may be opened and filled.

"Sealability" refers to two characteristics: The speed with which a seal "sets up" and develops strength while hot and the strength of the seal thereby formed in terms of resisting separation of the sealed films. For example bags of the film of this invention are preferably formed from lengths of flattened tubing closed at one end by a transverse heat seal. The open end receives a product, after which the bag is evacuated and closed with either another transverse heat seal or, more commonly, the neck of the filled bag will be gathered and a metal clip applied to close it. After filling, evacuation, and closing the bag will be placed in hot water to heat-shrink it. If the seal is not sufficiently strong at the elevated temperature it will be pulled apart by the shrink forces. The provision of a good seal is a problem because self-welding films tend to lose strength at heat shrinking temperatures. Self-adhesion retention concerns the ability of the material to adhere to itself at elevated temperatures.

It is an object of the present invention to provide an improved self adhering film which has a good combination of processability, sealability, and self-adhesion retention.

A typical prior art self-adhering film is disclosed in United States Patent No. 3,625,348 (Titchenal *et al*). This patent discloses a bag made from a heat-shrinkable multi-layer film which has a tubular inner layer of ethylene-vinyl acetate copolymer laminated to an outer layer of vinylidene chloride-vinyl chloride copolymer and then biaxially oriented. When an article is placed in the bag and the bag submerged in a hot water bath, the bag will shrink into conforming contact with the article and all the opposing contacting surfaces of the ethylene-vinyl acetate copolymer layers will seal to each other. An advantage of such a bag structure is that upon puncture of the bag the multi-layer remains in conforming contact with the article. However, the abuse resistance and strength of the seal in commercial packages apparently in accordance with this patent is not completely satisfactory for normal commercial usage where packages of large cuts of meat or large chunks of cheese will be transported and receive rough handling.

Our U.S. Patent No. 3,741,253 (inventors: Brax *et al*) discloses a packaging film which is a three layer laminate of a tubular inner layer of ethylene-vinyl acetate copolymer, a middle, oxygen-barrier, layer of vinylidene chloride copolymer, and an outer layer of an ethylene-vinyl acetate copolymer. Commercial packages made in accordance with this patent have excellent abuse resistance, but only limited self-adhesion retention.

U.S. Patent No. 4,022,850 describes a self-adhering stretchable packaging film of a blend of 90 to 99.5% by weight of an ethylene-vinyl acetate copolymer of melt flow index 0.2 to 20 and 0.05 to 10% by weight of a low molecular weight hydrocarbon, polyisobutylene or polybutylene resin. British Specification No. 1,472,059 describes improving certain properties of this film by including in the blend a polyol ester surfactant such as polyoxyethylene sorbitan monolaurate.

Self-adhering packaging films are most often made into pouches, bags, containers, or receptacles. For packaging fresh meats it is desirable that the container not only be self-adhering but that it have low gas and moisture permeability and be heat-shrinkable and abuse-resistant because current packaging techniques require that fresh beef, for example, remain out of contact with air if it is to be stored chilled and unfrozen for periods in excess of 10 days. For such storage, beef products are preferably placed in a self-welding container. The container evacuated, and sealed with a heat seal or metal clip. After sealing, the bag is

shrunk around the enclosed product by placing it in an elevated temperature medium such a heat tunnel or hot water bath. In the self-adhering bag or container the excess areas of the bag "weld" together after the bag has been shrunk. Self-adhesion provides a second seal should the clip or heat seal fail or the bag be punctured and the self-adhesion also will retard movement and seepage of blood and juices or "purge" within the package because the container material has welded to itself and there are no wrinkles or crevices in the material into which the purge can seep. Thus, in a self-adhering bag there is less loss of the product due to defective clips or seals and the packaged product has in improved appearance by preventing the seepage of the juices from the product into the extremities of the bag.

It has been surprisingly discovered that a self-adhering packaging film having superior seal strength and abuse resistance to other self-adhering films can be made from a blend of at least two ethylene polymers (defined below). The first of these two ethylene polymers is a copolymer comprising units of ethylene and vinyl acetate, and has a melt flow substantially greater (from 5 to 600 times greater) than that of the second ethylene polymer and preferably also than that of any other polymer in the blend. The first polymer is referred to herein as having a high melt flow. It is preferably 28.0 or greater and most preferably in the range of 40 to 300. The second ethylene polymer is polyethylene or a copolymer comprising units of ethylene and vinyl acetate and is referred to herein as having a low melt flow, which is less than 5.0, especially from 0.25 up to, but less than, 5.0. Of the measurable parameters we believe that melt flow most accurately describes the desired characteristics of the polymers, as melt flow is a function of both composition and molecular weight. Melt flow (otherwise known as melt index) is determined by the procedure of American Society for Testing Materials Specification ASTM—D1238, Condition E, in units of grams of polymer per 10 minutes under a standard load of 2160 g. and at a temperature of 190°C.

The EVA copolymers, i.e. copolymers consisting of or including units of ethylene and vinyl acetate, used in the present invention will ordinarily be bipolymers of these monomers or terpolymers thereof with a third monomer. The term "copolymer" includes bipolymers and terpolymers. While most of the specific description of embodiments of the invention hereinafter refers to bipolymers, it will be understood that the same principles apply to EVA copolymers generally.

The invention includes a film laminate in which the above-defined film forms the inner wall of a tubular, multi-layer film laminate where one of the additional laminate layers is a polymeric material exhibiting low gas permeability such as one of the copolymers of vinylidene chloride and vinyl chloride, one of the hydrolysed ethylene-vinyl acetate copolymers, polyvinyl alcohol, a polyester, a polyamide, or an acrylonitrile copolymer. Such a gas barrier layer, especially an oxygen barrier layer, is *per se* known and well understood in the art. Preferably, the film laminate has been oriented (by stretching) to make it heat-shrinkable. The laminate is preferably used in the form of a bag, which can be made from a tubular film by sealing one end of the tube.

A preferred film laminate of at least 4 layers comprises (a) a self-adhering layer as defined above, (b) a layer comprising an EVA copolymer (not necessarily a blend) which has been cross-linked, e.g. by irradiation to a dosage of 0.5 to 4.0 megarads, (c) an oxygen barrier layer and (d) a layer of EVA copolymer (not necessarily a blend and not necessarily crosslinked). Preferably all the EVA copolymers are bipolymers.

In general, the film can be prepared by extrusion (and lamination if necessary). The invention includes specifically a process for making a self-adhering packaging film comprising extruding a substantially unstretched tube from a blend of polymers defined above for the film of the invention, and, if a laminate is to be prepared, forms a tubular substrate layer or layers in lamination therewith, preferably by simultaneous extrusion (coextrusion) so that the layer of said blend forms the inner wall, optionally forming additional layer(s) by extrusion; optionally irradiating said tube to induce cross-linking in said polymer blend; and, stretching said tube to reduce the film thickness (to a desired value). Preferably it · is stretched to make it heat-shrinkable.

In the preferred process it has been found that optimum self-adhering and strength characteristics are achieved when said blend has been cross-linked to the degree which is induced by a radiation dosage of at least 0.5 megarads (MR), usually 0.5 to 4 MR, preferably 0.5 to 2.5 MR. depending upon the specific polymer and it initial molecular weight.

In the preferred embodiment of the process of the invention said blend of at least two said ethylene polymers is coextruded with one or more additional layers in tubular form with the layer of polymer blend forming the inner surface of the tube; and, after coextrusion, the tube is cooled, collapsed, and, if desired, and provided that at least one of said additional layers is cross-linkable by irradiation, irradiated to the optimum dosage level. The collapsed tubing is then heated to the orientation temperature range of one of the cross-linked materials in the tube; expanded to film thickness by the trapped bubble technique; rapidly cooled after expansion; and, again collapsed and wound up. Rapid cooling is necessary in order to bring the self-adhering surfaces below the temperature of self-adhesion before the bubble is collapsed.

Further preferred embodiments of the invention will be described with reference to the accompanying drawings, in which:

Figure 1 is a schematic representation of a preferred process of making the self-welding packaging film of the present invention;

Figure 2 is a schematic representation of the process of stretching the film made in the process of Figure 1; and

Figure 3 is a schematic representation of the cross-section of the packaging film of the present invention made according to the process shown in Figures 1 and 2.

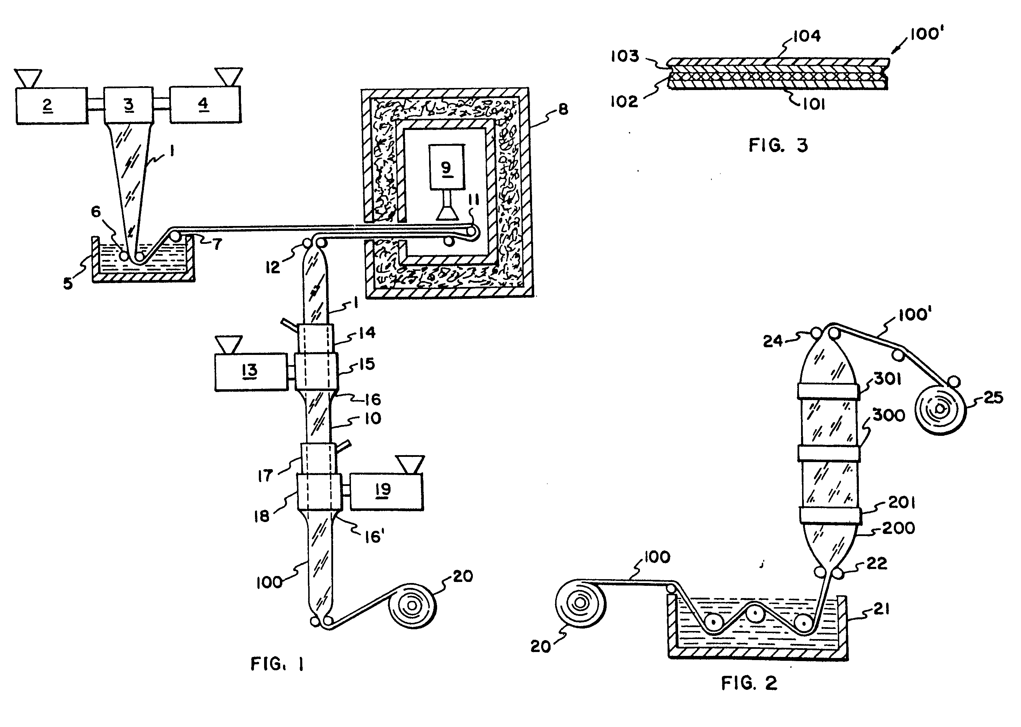

Turning first to Figure 1, the preferred process of the subject invention will be described. Extruders 2 and 4 containing polymeric materials for inner and outer layers of the laminate respectively are shown feeding coextrusion die 3 to produce a multi-walled, tubular film laminate 1. This laminate is chilled by bath 5 and collapsed by pinch rolls 6 and leaves the bath 5 over guide rolls 7. As is known in the art, a suitable release agent is maintained within the laminated tube 1 to stop surfaces of the inner layer from sticking to each other as they come nearer together just above pinch rolls 6. Coextrusion dies fed by two or more extruders are well known in the art and are commercially available.

Extruder 2 which, by way of example, feeds the inner melt stream for die 3 to form the innermost annular die stream in die 3 is fed by a blend of polymeric resins wherein approximately 95% by weight of the blend is ethylene-vinyl acetate bipolymer having 18% VA and a melt flow of 1.5 and approximately 5% of the blend is ethylene-vinyl acetate bipolymer having 30% VA and a melt of 150 (Throughout "% VA" means the weight percentage of polymerised vinyl acetate units in the copolymer). For the material for the outer or substrate layer of the two ply tube which emerges from coextrusion die 3, extruder 4 is fed by an ethylene-vinyl acetate bipolymer containing 18% VA and having a melt flow of 0.8. After the coextruded tubing leaves bath 5 over guide roll 7 it passes into shielded irradiation vault 8, through the beam from electron accelerator 9, over roll 11, and out of the vault to rollers 12. The electron beam produced by the accelerator is operated at an energy and current level such that the tube material receives a dosage of approximately 1.5 MR.

After moving through pinch rollers 12 the previously flattened and collapsed tubing is inflated to a round cross-section but not stretched beyond its originally extruded diameter. The inflated tubing next passes through vacuum chamber 14 and receives a layer on its outer surface as it passes through extrusion coating die 15 which is fed by extruder 13. The function of the vacuum chamber 14 is to remove air from around the tubing and to prevent any air bubbles from being trapped between the coating layer 16 and the tubing.

The extruder 13 is fed with a blend of vinylidene chloride copolymers. One particularly useful blend is one which comprises a mixture of 5% to 15% by weight of a copolymer of vinylidene chloride and vinyl chloride prepared by suspension polymerisation and 95% to 85% by weight of a copolymer of vinylidene chloride and vinyl chloride prepared by emulsion polymerisation where each of said copolymers contains from 15% to 30% by weight of polymeric vinyl chloride units, as set forth in the above mentioned Brax et al patent.

After receiving the vinylidene chloride copolymer coating, the two ply tube is now three ply tube 10 which is fed through a second vacuum chamber 17 and through a second extrusion coating die 18 which is fed by extruder 19. Melt 16′ is coated onto the tubing 10 to form four ply tubing 100. The extruder 19 is fed with the same polymeric material as extruder 4 namely, ethylene-vinyl acetate bipolymer having 18% vinyl acetate and 0.8 melt flow. After cooling, the tubing is collapsed and wound up into roll 20.

In Figure 2 the four ply tubing 100 from roll 20 is unwound and fed through hot water bath 21 which is maintained at approximately 170°F (94°C) which is within the orientation temperature range of the irradiated ethylene-vinyl acetate bipolymer layer coextruded from extruder 4. As the collapsed tubing 100 leaves the water bath 21 and passes through pinch rollers 22, it is expanded into bubble 200 by inflating the tubing and trapping the inflated portion or bubble between pinch rollers 22 and 24. The inner layer of the laminated tubular film, which is the irradiated blend of ethylene-vinyl acetate bipolymers, has been raised to its melting temperature range by the hot water bath and the flattened tube walls are separable while hot so bubble 200 can be formed. However, this layer must be cooled below its self-adhering temperature before it is collapsed and wound up or it will completely adhere to itself in the wind up roll 25. Air rings 201, 300 and 301 surround the bubble 200 and chilled air is delivered to them. The chilled air impinges uniformly on the bubble surface to cool the inner layer below its self-adhering temperature range before the bubble is collapsed.

A cross-section of the expanded film 100′ is represented by Figure 3 where inner layer 101 is of the cross-linked blend of EVA bipolymers, the substrate layer 102 is of the cross-linked single EVA bipolymer, the relatively gas-impermeable, especially oxygen-impermeable, layer 103 is of the blend of vinylidene chloride copolymers, and the outer layer 104 comprises uncross-linked EVA bipolymer. This four ply material has low gas and moisture permeability, has excellent abuse resistance and structural strength, heat-shrinkability and self-weldability. The film 100′ in its flattened tubular condition as it is wound up to roll 25 in Figure 2 may be transversely heat-sealed at intervals and transversely severed in the heat-sealed areas at intervals along the length of the film, to form bags which are heat-shrinkable and self-adhering.

To demonstrate the sealability of the above described film, bags were made from the laid-flat expanded tubing 100' by transversely sealing the tubing with a conventional electric resistance, heat sealing bar. These bags were filled with boneless bottom rounds of beef weighing 50 to 100 lb (23 to 46 Kg.) each. These large rounds are considered one of the most difficult cuts of meat to package as they are readily distortable and can exert hydraulic pressure in all directions. The seals had a comparable survival rate to seals in bags made according to the above mentioned Brax *et al* patent under similar conditions. Thus, self-adhering bags of the present invention give satisfactory commercial seal strength which is most unexpected in a polymeric self-adhering film which is subjected to high shrink tension in the softening range or crystalline melt range of the polymer.

Preferred packaging films according to the invention are illustrated in the Examples set forth below. In each Example the self-adhering material comprises a blend of at least two polymers which have widely differing melt flows. In general, it has been found that the most satisfactory blends are those where the EVA copolymer (preferably bipolymer or terpolymer), of high melt flow, has a melt flow of 40 to 300, and the other ethylene polymer, of low melt flow has a melt flow from 0.25 to 3.0. The thickness of the film or layer formed from the blend is preferably from 0.1 to 0.4 mil (2.5 to 10 microns). Satisfactory self-adhesion characteristics and seal abuse resistance could not be achieved in films comprising unblended ethylene homopolymers or copolymers.

### Example 1

A film laminate was prepared as described above with reference to the drawings. The self-adhering layer was formed from a blend of 95% by weight of an EVA bipolymer having 18% VA (melt flow = 1.5) and 5% by weight of an EVA bipolymer having 30% VA (melt flow = 150). In addition to being the layer in a four ply laminate as· described, the copolymer blend can be formed into a self-supporting film. If self-adhesion retention and heat shrinkability are the desired characteristics of the film and low gas-permeability is not a main object, then the outer two layers of the preferred embodiment can be dispensed with and a two layer film laminate having the EVA bipolymer blend as the inner layer and the EVA bipolymer 9% VA, substrate as the outer layer and having both layers cross-linked will be a quite satisfactory heat shrinkable, self-adhering film having excellent processability, sealability, and self-adhesion.

The four ply laminate of this Example which was oriented from a hot water bath at approximately 200°F (94°C) will heat-shrink when reheated to approximately that same temperature.

### Example 2

Example 1 was repeated except that the substrate and outer layers were of an EVA bipolymer having 12% VA. An excellent film was obtained and bags made therefrom exhibited the desired combination of processability, self-adhesion, and seal strength.

### Example 3 (Comparative)

A tubing with a substrate layer and an inside self-adhering layer was coextruded according to the process described above with reference to the drawings. Before stretching, the tubing had a diameter of 3 1/8 inches (79 mm), the self-adhering layer was 2 mils (50 microns) thick and the substrate layer was 15 mils (0.38 mm) thick. The self-adhering layer comprised a mixture of two EVA bipolymers, the first having 25% VA and a melt flow of 17 and the second having 30% VA and a melt flow of 6. The substrate layer was an EVA bipolymer with 9% VA (and a melt flow of 3.0). After cooling, the tubing was irradiated to a dosage level of 6.5 MR. Next, the tubing was coated with the same gas-impervious material as used in Example 1 and the coating thickness of this material was 4 mils (0.10 mm). The outer layer comprised the same EVA bipolymer as the substrate layer and its thickness was 7 mils (0.18 mm). This four ply tubing was then passed through a hot bath at a temperature of approximately 200°F (94°C) and expanded into tubing having a 12 inch (30.5 cm) diameter. This film had excellent heat-shrinkability and self-adhesion retention, but its sealability and processability were not as satisfactory as the films of Examples 1 and 2.

### Example 4

A three ply tubular film was made by extruding the inner or self-adhering layer as a tube with 17 mil (0.43 mm) walls, the tube being of the same material as that in Example 1. This tubing was irradiated and a second layer, the gas-impervious material of Example 1, was extrusion-coated onto the tubing after it was inflated in a manner similar to that taught by said Brax *et al.* patent; and the third layer was the substrate material from Example 2 which was extrusion-coated onto the impervious material. This three-ply tubing was blown into tubular film as in the above-described preferred embodiment. Bags made from this tubular film exhibited excellent self adhesion at 180°F (82°C) to 185°F (85°C) with both boneless and bone-in meat products. At temperatures greater than 190°F (88°C) the shrinkage of the material was so great that no excess material was available to self-adhere. No seal failures were encountered during the evaluation of this material.

Examples 5 to 15 (Comparative)

In the Table below, the evaluation of eleven multi-layer, tubular, film laminates is summarised. Each multi-layer film laminate has a blended self adhering layer as the inner layer with the blend having the composition specified in the Table and the inner layer is 2 to 3 mils (0.05 to 0.08 mm) thick before stretching. The middle layer and outer layer are of the same composition as the corresponding layers in the film of Example 1 above. Each tubular structure was formed into an 11″ × 30″ (27.9 × 76.2 mm) bag and the bags were filled with sirloin tips, rib eyes and chuck rolls. Then the packages of Examples 5 to 15 were sealed, shrunk, and then opened and evaluated. The evaluation shown in the Table is relative to packages made according to the above-mentioned Titchenal *et al.* patent.

TABLE
Self-Adhering Layer Composition

| Example No. | LOW MELT FLOW POLYMER | | | HIGH MELT FLOW POLYMER | | | Evaluation of Performance |
|---|---|---|---|---|---|---|---|
| | % in blend | Polymer | Melt Flow | % in blend | Polymer | Melt Flow | |
| 5 | 70% | EVA (25% VA) (1) | 17.3 — 20.9 | 30% | EVA (33% VA) | 38.0 — 48.0 | Good self-adhesion retention Poor processability |
| 6 | 70% | TP (28% VA) (2) | 5.0 — 7.0 | 30% | EVA (33% VA) | 38.0 — 48.0 | Excellent self-adhesion retention Poor processability |
| 7 | 50% | TP (28% VA) | 5.0 — 7.0 | 50% | EVA (33% VA) | 38.0 — 48.0 | ,, |
| 8 | 40% | TP (28% VA) | 5.0 — 7.0 | 60% | EVA (25% VA) | 17.3 — 20.9 | ,, |
| 9 | 50% | TP (28% VA) | 5.0 — 7.0 | 50% | EVA (25% VA) | 17.3 — 20.9 | Good self-adhesion retention Poor processability |
| 10 | 30% | EVA (28% VA) | 5.3 — 6.7 | 70% | EVA (25% VA) | 17.3 — 20.9 | Best self-adhesion retention Poor processability |
| 11 | 50% | EVA (18% VA) | 9.0 | 50% | EVA (28% VA) | 22.0 — 28.0 | Good self-adhesion retention Poor processability |
| 12 | 100% | Ionomer (3) | 1.4 | 0% | | | Good processability Poor self-adhesion retention |
| 13 | 70% | Ionomer (3) | 1.4 | 30% | EVA (25% VA) | 17.3 — 20.9 | ,, |
| 14 | 70% | Ionomer (4) | 4.4 | 30% | EVA (25% VA) | 17.3 — 20.9 | ,, |
| 15 | 70% | Ionomer (5) | 1.4 | 30% | EVA (25% VA) | 17.3 — 20.9 | ,, |

(1) Ethylene-Vinyl Acetate bipolymer. Percentage following abbreviation "EVA", is the weight percentage of vinyl acetate.

(2) Terpolymer of ethylene, vinyl acetate, and 4% to 8% methacrylic acid. Percentage following "TP" is the weight percentage of vinyl acetate.

(3) "Surlyn" (Registered Trade Mark) ionomer 1650 by Du Pont.

(4) "Surlyn" (Registered Trade Mark) ionomer 1652 by Du Pont.

(5) "Surlyn" (Registered Trade Mark) ionomer 1601 by Du Pont.

In Examples 5 to 11 above, polymers with melt flows of 5 upwards were blended with polymers having melt flows of 17 upwards in weight ratios from 30/70 to 70/30. Good to excellent self-adhesion retention was achieved but the processability was unsatisfactory. In Examples 13—15, ionomers having low melt flow, of 1.4 to 4.4, were blended with EVA copolymers having melt flows of 17.3 to 20.9 in 70/30 weight ratio and in Example 12 the low melt flow ionomer was used by itself. In each instance the material processed well but did not possess sufficient self-adhesion. To achieve the especially desired combination of self-adhesion, sealability, and processability it has been discovered that one blend component should have a melt flow less than 5.0, preferably 0.25 to 3.0, while the other blend component should have a melt flow at least 5 times greater than the low melt flow, preferably 28.0 or greater, most preferably 40 to 300.

To determine if cross-linking the self-adhering layer would be likely to improve its properties, a three ply tube comprising an inner layer of EVA bipolymer having 18% VA and a melt flow of 1.5, a gas-impervious layer as previously described with reference to the drawings, and an outer layer of the same EVA bipolymer as the inner layer was prepared. (We considered it unnecessary in this test to formulate a blend of EVA copolymers for the self-adhering layer. If cross-linking were to improve the seal strength of the layer consisting of a single EVA copolymer, it would be likely also to improve the seal strength of a layer containing the blend of EVA copolymers as defined in connection with the invention). Three different samples of tubing were prepared, one receiving no irradiation, the next receiving irradiation dosage of 2 MR, and the third receiving a dosage of 4 MR. The tubing was then heated, blown into a bubble, cooled, collapsed, and made into bags. These bags were given a "burst test" and bags receiving no radiation dosage survived an average of 9 seconds in the test, those receiving 2 MR survived 60 seconds and greater, and those receiving 4 MR survived an average of 14 seconds. Thus, it is concluded that irradiation increases the seal strength of the bags and that the maximum effectiveness of irradiation occurs at a dosage level in the proximity of 2 MR. Of course, the optimum dosage will be different for different polymers as some cross-link more readily that others. For example, low melt flow polymers have larger molecules and tend to have a greater probability for cross-linking and consequently show greater changes at lower dosages as the molecules develop cross-linked bonds. It has been found, in general, however, that cross-linking effects become noticeable at a dosage level of about 0.5 MR and that beyond a dosage level of about 4.0 MR the materials tend to become stiffer and the self-adhesion retention tends to diminish somewhat.

## Claims

1. A self-adhering packaging film in the form of a single film or a film laminate, said single film or a surface layer of a film laminate, respectively being of an ethylene polymer, characterised in that the film or layer is of a blend of at least two ethylene polymers, one of which is polyethylene or a copolymer comprising units of ethylene and vinyl acetate and has a low melt flow, namely of less than 5.0 and the other of which is a copolymer comprising units of ethylene and vinyl acetate having a high melt flow, namely 5 to 600 times greater than the low melt flow, the melt flows being in units of grams per 10 minutes determined with a load of 2160 g and at a temperature of 190°C in accordance with ASTM specification No. D1238, Condition E.

2. A film according to claim 1 characterised in that the high melt flow is 28.0 or greater.

3. A film according to claim 2 characterised in that the low melt flow is from 0.25 to less than 5.0 and the high melt flow from 40 to 300.

4. A film according to claim 1, 2 or 3, characterised in that both said ethylene polymers are bipolymers comprising units of ethylene and vinyl acetate.

5. A film according to any preceding claim characterised in that the ethylene polymers are cross-linked to the degree which is induced by a radiation dosage of from 0.5 to 4 megarads.

6. A film according to any preceding claim characterised in that it is heat-shrinkable.

7. A film according to claim 6 in the form of a film laminate having a sequence of layers (b), (c) and (d) as follows:—
(b)  a substrate layer comprising a copolymer which comprises units of ethylene and vinyl acetate cross-linked by irradiation to a dosage of 0.5 to 4.0 megarads;
(c)  an oxygen-barrier layer comprising a copolymer of vinylidene chloride and vinyl chloride; and
(d)  a layer comprising a copolymer which comprises units of ethylene and vinyl acetate, characterised in that it also contains a self-adhering surface layer (a) comprising a blend of at leat two copolymers which comprise units of ethylene and vinyl acetate, one copolymer having a melt flow of from 0.25 to less than 5.0 and the other having a melt flow of from 40 to 300.

8. A film according to any preceding claim in the form of a tube or bag in which (in the case of a laminate) the self-adhering layer forms the inner wall of said tube or bag, respectively.

9. A process for preparing a self-adhering packaging film according to claim 1 in the form of a single film or film laminate, characterised in that one extrudes a substantially unstretched tube from a blend of ethylene polymers defined in any one of claims 1 to 4 and, if a laminate is to be prepared, forms a tubular substrate layer in lamination therewith so that the layer of said blend forms the inner wall, forms any other desired layer or layers of the laminate by extrusion, and stretches the resultant tube to reduce its thickness.

10. A process according to claim 9, characterised in that the substrate layer is formed by simultaneous extrusion with the layer of the blend of polymers, the tube is irradiated to a dosage of at least 0.5 megarads, and then stretched to make it heat-shrinkable.

## Revendications

1. Film d'emballage autosoudable sous forme d'un film unique ou d'un film stratifié, ce film unique, ou une couche superficielle d'un film stratifié, respectivement, étant constitué d'un polymère d'éthylène, caractérisé en ce que le film, ou la couche, consiste en un mélange d'au moins deux polymères d'éthylène dont l'un est du polyéthylène ou un copolymère constitué de motifs d'éthylène et d'acétate de vinyl et a un faible indice de fluidité, à savoir de moins de 5,0, et l'autre est un copolymère constitué de motifs d'éthylène et d'acétate de vinyl ayant un indice de fluidité élevé, à savoir de 5 à 600 fois supérieur au faible indice de fluidité, les indices de fluidité étant exprimés en grammes pour 10 min avec une charge de 2 160 g et à une température de 190°C, selon la norme américaine ASTM n° D 1238, condition E.

2. Film selon la revendication 1, caractérisé en ce que l'indice de fluidité élevé est de 28,0 ou plus.

3. Film selon la revendication 2, caractérisé en ce que l'indice de fluidité faible est compris entre 0,25 et moins de 5,0 et l'indice de fluidité élevé est compris entre 40 et 300.

4. Film selon la revendication 1, 2 ou 3, caractérisé en ce que lesdits deux polymères d'éthylène sont des bipolymères constitués de motifs d'éthylène et d'acétate de vinyle.

5. Film selon l'une quelconque des revendications précédentes, caractérisé en ce que les polymères d'éthylène sont réticulés à un degré qui est produit par une dose d'irradiation de 0.5 à 4 mégarads.

6. Film selon l'une quelconque des revendications précédentes, caractérisé en ce qu'il est rétractable à chaud.

7. Film stratifié selon la revendication 6, comportant une succession de couches (b), (c) et (d) suivantes:

(b) une couche de substrat constituée d'un copolymère composé de motifs d'éthylène et d'acétate de vinyle réticulé par irradiation à la dose de 0,5 à 4,0 mégarads;

(c) une couche imperméable à l'oxygène constituée d'un copolymère de chlorure de vinylidène et de chlorure de vinyle; et

(d) une couche constituée d'un copolymère composé de motifs d'éthylène et d'acétate de vinyle, caractérisé en ce qu'il contient aussi une couche superficielle autosoudable (a) constituée d'un mélange d'au moins deux copolymères constitués de motifs d'éthylène et d'acétate de vinyle, un copolymère ayant un indice de fluidité de 0,25 à moins de 5,0 et l'autre ayant un indice de fluidité de 40 à 300.

8. Film selon l'une quelconque des revendications précédentes, sous forme d'un tube ou d'un sac dans lequel (dans le cas d'un stratifié) la couche autosoudable constitue la paroi interne dudit tube ou sac, respectivement.

9. Procédé pour préparer un film d'emballage autosoudable selon la revendication 1, sous la forme d'un film unique ou d'un film stratifié, caractérisé en ce qu'on extrude un tube pratiquement non étiré à partir d'un mélange de polymères d'éthylène défini dans l'une quelconque des revendications 1 à 4 et, dans le cas où l'on prépare un stratifié, on forme une couche de substrat tubulaire, stratifiée, avec celui-ci, de telle sorte que la couche dudit mélange forme la paroi interne, on forme par extrusion une ou plusieurs autres couches éventuelles du stratifié et on étire le tube obtenu pour réduire son épaisseur.

10. Procédé selon la revendication 9, caractérisé en ce qu'on forme la couche de substrat par extrusion simultanée avec la couche du mélange du polymères, in irradie le tube à la dose d'au moins 0,5 mégarad, puis on étire le tube pour le rendre rétractable à chaud.

## Patentansprüche

1. Selbsthaftende Verpackungsfolie in Form einer Einzelfolie oder eines Folienlaminats, wobei die Einzelfolie bzw. eine Oberflächenschicht des Folienlaminats aus einem Ethylenpolymer besteht, dadurch gekennzeichnet, daß die Folie oder die Schicht aus einer Mischung von mindestens zwei Ethylenpolymeren besteht, von denen das eine Polymer Polyethylen oder ein Einheiten von Ethylen und Vinylacetat enthaltendes Copolymer mit einem niedrigen Schmelzfluß von weniger als 5,0 und das andere Polymer ein Einheiten von Ethylen und Vinylacetat enthaltendes Copolymer mit einem hohen, 5 bis 600 mal größeren Schmelzfluß ist, wobei der Schmelzfluß in g/10 min. angegeben ist und unter einer Belastung von 2160 g und bei einer Temperatur von 190°C nach ASTM Nr. D 1238, Condition E bestimmt wird.

2. Folie nach Anspruch 1, dadurch gekennzeichnet, daß der hohe Schmelzfluß 28,0 oder mehr beträgt.

3. Folie nach Anspruch 2, dadurch gekennzeichnet, daß der niedrige Schmelzfluß 0,25 bis weniger als 5,0 und der hohe Schmelzfluß 40 bis 300 beträgt.

4. Folie nach Anspruch 1, 2 oder 3, dadurch gekennzeichnet, daß beide Ethylenpolymere Bipolymere sind, die Einheiten von Ethylen und Vinylacetat enthalten.

5. Folie nach jedem der vorangegangenen Ansprüche, dadurch gekennzeichnet, daß die Ethylenpolymeren in einem Ausmaß vernetzt sind, das durch eine Bestrahlungsdosis von 0,5 bis 4 Megarad bewirkt wird.

6. Folie nach jedem der vorangegangenen Ansprüche, dadurch gekennzeichnet, daß sie heißschrumpfbar ist.

7. Folie nach Anspruch 6 in Form eines Folienlaminats mit einer Folge von Schichten (b), (c) und (d) wie folgt:

(b)  eine Substratschicht, die ein Copolymer enthält, das durch Bestrahlung in einer Dosis von 0,5 bis 4.0 Megarad vernetzte Einheiten von Ethylen und Vinylacetat enthält;

(c)  eine Sauerstoffsperrschicht, die ein Copolymer aus Vinylidenchlorid und Vinylchlorid enthält; und

(d)  eine Schicht, die ein Einheiten von Ethylen und Vinylacetat enthaltendes Copolymer enthält, dadurch gekennzeichnet, daß sie auch eine selbsthaftende Oberflächenschicht (a) enthält, die eine Mischung aus mindestens 2 Copolymeren enthält, die Einheiten von Ethylen und Vinylacetat enthalten, wobei ein Copolymer einen Schmelzfluß von 0,25 bis weniger als 5.0 und das andere Copolymer einen Schmelzfluß von 40 bis 300 besitzt.

8. Folie nach jedem der vorangegangenen Ansprüche in Form eines Schlauches oder eines Beutels, dadurch gekennzeichnet, daß (im Falle eines Laminats) die selbsthaftende Schicht die Innenwand des Schlauches bzw. Beutels bildet.

9. Verfahren zur Herstellung einer Selbsthaftenden Verpackungsfolie gemäß Anspruch 1 in Form einer Einzelfolie oder eines Folienlaminats, dadurch gekennzeichnet, daß man einen im wesentlichen ungestreckten Schlauch aus einer Mischung von Ethylenpolymeren gemäß der Definition in jedem der Ansprüche 1 bis 4 extrudiert und, wenn ein Laminat hergestellt werden soll, eine schlauchförmige Substratschicht damit laminiert, so daß die Schicht aus der Mischung die Innenwand bildet, man jede andere gewünschte Schicht oder Schichten des Laminats durch Extrudieren bildet und den resultierenden Schlauch zur Verringerung seiner Dicke streckt.

10. Verfahren nach Anspruch 9, dadurch gekennzeichnet, daß man die Substratschicht durch gleichzeitiges Extrudieren mit der Schicht aus der Mischung von Polymeren bildet, den Schlauch mit einer Dosis von mindestens 0,5 Megarad bestrahlt und ihn dann streckt, um ihn heißschrumpfbar zu machen.

FIG. 3

FIG. 2

FIG. 1